# EUROPEAN PATENT APPLICATION

(11) **EP 4 134 156 A1**
(43) Date of publication of application: **15.02.2023**
(21) Application number: 21784533.8
(22) Date of filing: 07.04.2021
(51) Int. Cl.: B01D 61/44, B01D 61/46, B01D 69/10, B01D 69/12, B01D 71/02, B01D 71/06, C01G 23/04, C02F 1/44, C02F 1/469, C25B 1/16, C25B 9/23, C25B 11/073

(54) **ION SELECTIVE PERMEABLE MEMBRANE AND ION RECOVERY DEVICE**

(30) Priority: 08.04.2020 JP 2020070084; 08.04.2020 JP 2020070085
(71) Applicant: Idemitsu Kosan Co., Ltd, Tokyo 100-8321 (JP)
(72) Inventor: UTSUNO, Futoshi, Sodegaura-shi, Chiba 299-0293 (JP); JIA, Qingxin, Sodegaura-shi, Chiba 299-0293 (JP); WAKI, Ichitaro, Tokyo 100-8321 (JP); TOMITA, Hiroshi, Atsugi-shi, Kanagawa 243-0206 (JP)
(74) Representative: Vossius & Partner Patentanwälte Rechtsanwälte mbB
(86) International application number: PCT/JP2021/014819
(87) International publication number: WO 2021/206126

(57) **Abstract**

Provided are an ion selective permeable membrane that enables efficient recovery of ions, particularly metal ions, in an aqueous solution, and an ion recovery device including the ion selective permeable membrane. The ion selective permeable membrane includes an ion conductive layer containing an ion conductor formed of an inorganic substance and has a configuration (I) in which the ion conductive layer is provided on at least one principal surface side of a support layer, or a configuration (II) in which an electrode and a catalyst are provided on at least one principal surface side of the ion conductive layer.

## Description

### Technical Field

The present invention relates to an ion selective permeable membrane and an ion recovery device including the ion selective permeable membrane.

### Background Art

It is desired to develop a method for efficiently recovering various metal ions from the viewpoint of effective utilizing resources and reducing a burden on a global environment caused by wastewater generated as a result of industrial activities. In particular, lithium secondary batteries and the like are used in large quantities as secondary batteries for various portable devices, and development of a technique for efficiently recovering lithium ions used in these secondary batteries is desired. In addition, lithium secondary batteries are also used in hybrid cars and electric vehicles that are being developed to comply with carbon dioxide emission regulations. Many techniques for recycling lithium secondary batteries have been developed so far, but development of a highly efficient lithium recovery technique has been desired.

For example, there has been known a technique described in PTL 1 as a technique for recovering metal ions (sodium ions). This technique uses an ion exchange membrane (Nafion N-962, manufactured by DuPont), and does not selectively recover a specific metal ion species. In addition, there also has been known a technique for recovering lithium ions including a lithium ion selective permeable membrane described in PTL 2. The lithium ion selective permeable membrane contains lithium atoms as one of constituent elements thereof, and lithium ions outside a crystal migrate between lithium sites in the crystal, and thus exhibiting ion conductivity, which allows selective recovery for lithium ions.

### Citation List

### Patent Literature

PTL 1: JP 2000-178782 A
PTL 2: JP 2017-131863 A

### Summary of Invention

### Technical Problem

In order to improve the recovery efficiency in the method for recovering ions, it is important to increase a surface area of a membrane used for separation and increase a contact area with a solution containing ions to be recovered. Accordingly, it is necessary to increase an area of the ion selective permeable membrane. However, for example, when the area is increased, the ion selective permeable membrane becomes heavy, making it difficult to handle and also giving rise to a problem in strength. In the method using an ion exchange membrane as in PTL 1, a relatively large area is possible, but it is difficult to selectively recover only a specific ion. In addition, when the lithium ion selective permeable membrane described in PTL 2 is used, it is extremely difficult to increase the area while maintaining the mechanical strength and reducing the weight.

There is a demand for an improvement in the inventions described in PTLs 1 and 2 with respect to being selective and efficient for a specific ion. In addition, the methods described in PTLs 1 and 2 have a problem that the recovery efficiency for lithium ions decreases as the recovery of the lithium ions progresses, and there is a demand for an improvement in the efficiency of a specific ion species on an industrially feasible scale.

Further, there is a demand for recovering lithium ions from a liquid having a low concentration of metal ions, such as wastewater generated in a process of producing lithium ion batteries, geothermal water such as hot spring water, and mine wastewater, and an improvement in efficiency of recovering metal ions from these dilute solutions is also demanded.

An object of the present invention is to provide an ion selective permeable membrane that enables efficient recovery of ions, particularly metal ions, in an aqueous solution, and an ion recovery device including the ion selective permeable membrane.

### Solution to Problem

As a result of intensive studies to solve the above problems, the present inventor has found that by providing a support and an ion conductor, an ion selective permeable membrane that enables efficient recovery of ions, particularly metal ions, in an aqueous solution, and an ion recovery device including the ion selective permeable membrane can be provided.

That is, the present invention provides the following [1] and [2].
[1] An ion selective permeable membrane including: an ion conductive layer containing an ion conductor formed of an inorganic substance, in which the ion selective permeable membrane has the following configuration (I) or (II):
   (I) the ion conductive layer is provided on at least one principal surface side of a support layer, and
   (II) at least one selected from an electrode and a catalyst is provided on at least one principal surface side of the ion conductive layer.
[2] An ion recovery device including the ion selective permeable membrane according to the above [1].

### Advantageous Effects of Invention

According to the present invention, it is possible to provide an ion selective permeable membrane that enables efficient recovery of ions, particularly metal ions, in an aqueous solution, and an ion recovery device including the ion selective permeable membrane.

### Brief Description of Drawings

Fig. 1 is a schematic diagram showing an example of a preferable configuration of an ion selective permeable membrane having a configuration (I) according to the present embodiment.
Fig. 2 is a schematic diagram showing an example of a preferable configuration of the ion selective permeable membrane having the configuration (I) according to the present embodiment.
Fig. 3 is a schematic diagram showing an example of a preferable configuration of a catalyst and an electrode in the ion selective permeable membrane having the configuration (I) according to the present embodiment.
Fig. 4 is a schematic diagram showing an example of a preferable configuration of the catalyst and the electrode in the ion selective permeable membrane having the configuration (I) according to the present embodiment.
Fig. 5 is a schematic diagram showing an example of a preferable configuration of the catalyst and the electrode in the ion selective permeable membrane having the configuration (I) according to the present embodiment.
Fig. 6 is a schematic diagram showing an example of a preferable layer configuration of the ion selective permeable membrane having the configuration (I) according to the present embodiment.
Fig. 7 is a schematic diagram showing an example of a preferable layer configuration of the ion selective permeable membrane having the configuration (I) according to the present embodiment.
Fig. 8 is a schematic diagram showing an example of a preferable layer configuration of the ion selective permeable membrane having the configuration (I) according to the present embodiment.
Fig. 9 is a schematic diagram showing an example of a preferable configuration of an ion recovery device according to the present embodiment.
Fig. 10 is a schematic diagram showing an example of a preferable configuration of the ion selective permeable membrane having the configuration (I) according to the present embodiment.
Fig. 11 is a schematic diagram showing a slit-shaped metal mask used in Example 1.
Fig. 12 is a schematic diagram showing a catalyst mesh-shaped catalyst formed on an ion conductive layer.
Fig. 13 is a schematic diagram showing an example of a preferable configuration of an ion selective permeable membrane having a configuration (II) according to the present embodiment, and is a schematic diagram of a cross-sectional view when a mesh-shaped electrode is further provided in Fig. 12, taken along a line A-B.
Fig. 14 is a schematic diagram showing an example of another preferable configuration of the ion selective permeable membrane having the configuration (II) according to the present embodiment.
Fig. 15 is a schematic diagram showing an example of another preferable configuration of the ion selective permeable membrane having the configuration (II) according to the present embodiment.
Fig. 16 is a schematic diagram showing an example of a preferable arrangement of a catalyst and an electrode in the ion selective permeable membrane having the configuration (II) according to the present embodiment.
Fig. 17 is a schematic diagram showing an example of a preferable arrangement of the catalyst and the electrode in the ion selective permeable membrane having the configuration (II) according to the present embodiment.
Fig. 18 is a schematic diagram showing an example of a preferable arrangement of the catalyst and the electrode in the ion selective permeable membrane having the configuration (II) according to the present embodiment.

### Description of Embodiments

An ion selective permeable membrane and an ion recovery device including the same according to one embodiment of the present invention (hereinafter referred to as "the present embodiment") will be described below. The ion selective permeable membrane and the ion recovery device according to the embodiment of the present invention are merely one embodiment of the present invention, and the present invention is not limited to the ion selective permeable membrane and the ion recovery device according to the embodiment of the present invention.

Further, in the present description, lithium means both lithium and lithium ions, and should be interpreted as appropriate as long as technical contradiction does not occur.

### [Ion Selective Permeable Membrane]

The ion selective permeable membrane according to the present embodiment is an ion selective permeable membrane including an ion conductive layer containing an ion conductor formed of an inorganic substance. The ion selective permeable membrane has the following configuration (I) or (II).
(I) The ion conductive layer is provided on at least one principal surface side of a support layer.
(II) At least one selected from an electrode and a catalyst is provided on at least one principal surface side of the ion conductive layer.

Hereinafter, the configuration (I) of the ion selective permeable membrane according to the present embodiment will be described.

### [Configuration (I)]

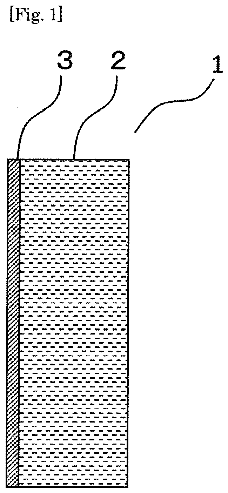

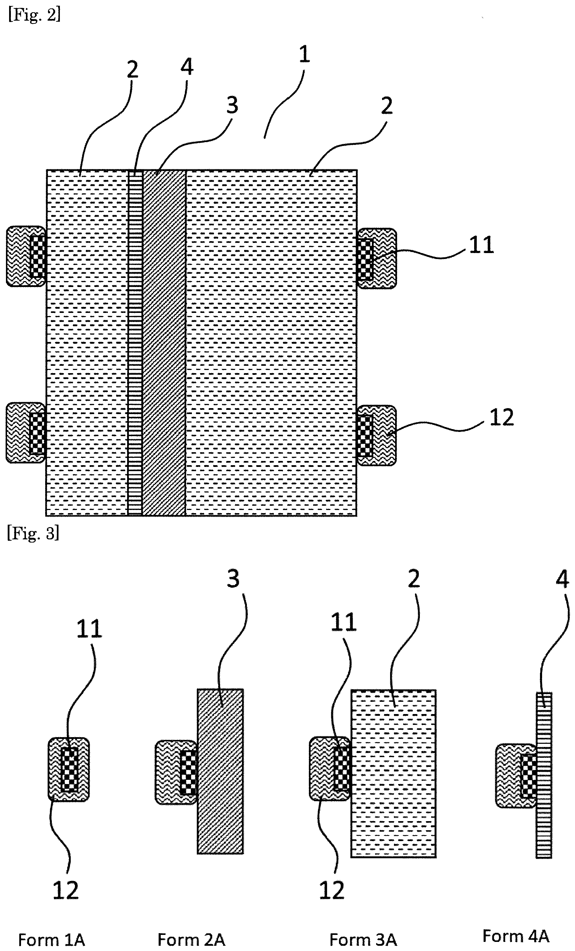

Ion selective permeable membranes shown in Figs. 1 and 2 are examples of a preferable configuration of the ion selective permeable membrane having the configuration (I) according to the present embodiment. An ion selective permeable membrane 1 shown in each of Figs. 1 and 2 includes an ion conductive layer 3 on one principal surface side of a support layer 2.

The ion selective permeable membrane 1 shown in Fig. 1 has the simplest layer configuration among ion selective permeable membranes having the configuration (I), and includes the ion conductive layer 3 on at least one principal surface side of the support layer 2. The ion selective permeable membrane 1 shown in Fig. 2 includes two support layers 2, and has a layer configuration of support layer 2/ion conductive layer 3/alkali-resistant layer 4/support layer 2 in this order. An electrode 11 is provided on the outermost surface of the ion selective permeable membrane 1, and a catalyst 12 is provided so as to cover the electrode 11.

The ion selective permeable membrane has a function of selectively allowing ions such as target lithium ions to permeate without allowing water to permeate by a function of an ion conductive layer to be described later. In the present description, "allowing ions to permeate" preferably means allowing only a specific ion to permeate, and it is sufficient to have a function of substantially allowing only a specific ion to permeate. Therefore, by installing the ion selective permeable membrane in a treatment tank to be described later, a treatment liquid and a recovery liquid can be separated from each other, and only ions to be recovered, such as lithium ions, in the treatment liquid can be moved to the recovery liquid.

A thickness of the ion selective permeable membrane varies greatly depending on a thickness of the support layer and the number of layers, and is not unconditionally determined. The thickness of the ion selective permeable membrane is generally preferably 100 µm or more, more preferably 1 mm or more, and even more preferably 2 mm or more in order to secure selective permeability of ions, insulation, and mechanical strength, and is preferably 20 cm or less, and more preferably 10 cm or less, from the viewpoint of permeability of ions, ease of production, and cost requirements.

For example, in the case of a form shown in Fig. 2, the thickness of the ion selective permeable membrane means a thickness from the catalyst 12 on one surface side to the catalyst 12 on a principal surface side opposite to the one surface side.

### <Support Layer>

The ion selective permeable membrane having the configuration (I) includes the ion conductive layer on at least one principal surface side of the support layer, that is, includes a support layer. As described in PTL 2, since only the lithium ion selective permeable membrane is used, it is necessary to increase the layer thickness so as to secure the strength in order to increase the size. However, when the thickness of the ion conductive layer is increased, a movement distance of ions to be recovered is increased, and thus the recovery efficiency is reduced.

Therefore, it is effective to use a permeable membrane including a support layer in order to meet a demand for a further increase in size without reducing the recovery efficiency. When the ion selective permeable membrane according to the present embodiment includes the support layer, not only the strength can be secured without increasing the layer thickness of the ion conductive layer exhibiting ion recovery performance and the breakage thereof can be inhibited, but also the ion recovery efficiency is improved because the movement distance of the ions can be shortened. Further, by using a lightweight material for the support layer, the weight of the ion selective permeable membrane can be reduced even when the ion selective permeable membrane is increased in size.

In order to secure the strength, the layer thickness of the support layer is preferably 1.0 µm or more, more preferably 2.0 µm or more, and even more preferably 10.0 µm or more. In addition, from the viewpoint of a recovery rate of ions and from the viewpoint of handling when installing the ion selective permeable membrane in an ion recovery device to be described later, the thickness of the support layer is preferably 1.0 cm or less, and more preferably 0.5 cm or less.

The ion selective permeable membrane having the configuration (I) according to the present embodiment may have one support layer as shown in Fig. 1, or may have two support layers as shown in Fig. 2.

### (Porous Body)

When the support layer is present on a treatment liquid side, that is, when the ion conductive layer is provided on one principal surface side of the support layer and the other principal surface is in contact with the treatment liquid, the support layer is preferably a porous body. When the support layer is a porous body, ions to be recovered easily reach the ion conductive layer and easily permeate through the ion conductive layer, so that ions, particularly metal ions, in the aqueous solution can be recovered more efficiently.

When the support layer is present on the recovery liquid side, that is, when the ion conductive layer is provided on one principal surface side of the support layer and the other principal surface is in contact with the recovery liquid, the support layer is preferably a porous body. When the support layer is a porous body, ions that have permeated through the ion conductive layer easily reach the recovery liquid and are easily recovered, so that ions, particularly metal ions, in the aqueous solution can be recovered more efficiently.

As the porous body, it is preferable to use a material that has a certain level of strength or more, that is permeable to an aqueous solution containing ions to be recovered, and that has chemical stability to the aqueous solution.

Preferred examples of the material constituting the porous body include carbon, metals, resins, polymers such as a lithium ion conductive polymer, and ceramics. Preferred forms thereof include a non-woven fabric and a porous body. Among these, preferred are a non-woven fabric, a carbon felt, a porous resin, a lithium ion conductive polymer, a porous metal, and the like, which are formed of the various materials described above. Among these, the non-woven fabric is more preferable because the non-woven fabric has a large elasticity and has an effect of preventing breakage of a particle layer in producing the ion selective permeable membrane or installing the ion selective permeable membrane on a device. From the viewpoint of electrical conductivity, the porous body may be formed of a material having electron conductivity, or may be formed of a material having ion conductivity. Any insulating material that has neither electron conductivity nor ion conductivity may be used

The non-woven fabric is preferably a plant fiber, an animal fiber, a mineral fiber, a metal fiber, or a chemical fiber. The chemical fiber is preferably rayon, nylon, polyester, an acrylic fiber, or an aramid fiber. For example, a filtration membrane such as a reverse osmosis membrane (RO membrane) or a nanofilter membrane (NF membrane) using a polyester non-woven fabric may be used. A dense ion conductive layer can also be formed by forming an ion conductor on a separation functional layer side of these membranes by a dry process such as a sputtering method.

Preferred examples of the porous resin include a polyolefin-based or urethane-based resin having fine pores.

Preferred examples of the lithium ion conductive polymer include a resin or an ethylene oxide polymer having, in the structure, an anionic group having a lithium ion as a counter ion, which is described in WO 2020/049884.

Preferred examples of the porous metal include a porous structure formed of a material containing a metal such as a copper-tin alloy (bronze), aluminum foam, stainless steel, nickel, titanium, platinum, rhodium, or iridium.

### <Ion Conductive Layer>

The ion conductive layer adopted in the ion selective permeable membrane according to the present embodiment contains an ion conductor formed of an inorganic substance to be described later, and is an indispensable layer for ion recovery.

The ion conductive layer is not particularly limited as long as the ion conductive layer is formed of an inorganic substance to be described later, and preferably includes at least one of a particle layer containing ion conductor particles and a thin film layer which is a thin film of an ion conductor, and more preferably includes both the particle layer and the thin film layer.

It is preferable that the ion conductive layer selectively allows ions to be recovered to permeate, substantially allows only ions such as metal ions to be recovered in the treatment liquid containing metal ions such as lithium ions to permeate, and does not allow other ions and water to permeate.

When an ion exchange membrane is used, for example, ions having an ion radius smaller than that of ions to be recovered are also allowed to permeate, and thus it is difficult to selectively recover the ions to be recovered. However, the ion selective permeable membrane according to the present embodiment can selectively recover the ions to be recovered by adopting an ion conductor formed of an inorganic substance instead of an ion exchange membrane formed of an organic substance.

The ion conductive layer may be a single layer or a plurality of layers. In the case of a plurality of layers, at least one layer is preferably a layer that substantially allows only ions to be recovered to permeate.

The ion conductive layer contains an ion conductor formed of an inorganic substance to be described later. A film thickness of the ion conductive layer is preferably 0.1 µm or more, more preferably 1 µm, and even more preferably 10 µm, from the viewpoint of exhibiting ion selectivity. In addition, from the viewpoint of further inhibiting the occurrence of cracks and the like and improving the ion recovery efficiency, the film thickness is preferably 1 mm or less, more preferably 500 µm or less, and even more preferably 300 µm or less.

The ion conductive layer preferably includes an ion adsorption layer on the surface thereof, similar to an ion conductive layer in an ion selective permeable membrane having a configuration (II) to be described later. The ion adsorption layer will be described later.

### (Ion Conductor)

The ion conductor used for the ion conductive layer preferably contains at least one of a lithium-containing oxide and a lithium-containing oxynitride.

When the ions to be recovered are lithium ions, the ion conductor is preferably a lithium ion conductor having high ion conductivity, such as a super lithium ion conductor. When a super lithium ion conductor is used as the ion conductor, the lithium recovery efficiency can be improved by increasing an ion current of lithium ions flowing between electrodes. Here, when the ions contained in the aqueous solution are lithium ions, the lithium ions are present as hydrated lithium ions with water molecules coordinated therearound. Therefore, in order to further increase the ion current, it is effective to implement a situation in which water molecules are easily removed from the surface of the ion selective permeable membrane (interface between the ion selective permeable membrane and the lithium ion treatment liquid).

When the ion conductive layer is formed using a coating liquid containing an ion conductor, a binder, and the like, which will be described later, a median diameter of ion conductor particles is preferably 100 µm or less, and more preferably 10 µm or less, from the viewpoint of further reducing the resistance of the ion conductive layer. On the other hand, from the viewpoint of inhibiting an increase in interface resistance between particles and interface resistance between particles and a binder, the median diameter of the ion conductor is preferably 1 nm or more, and more preferably 10 nm or more.

In the present description, the median diameter of the ion conductor is a volume-based median diameter measured using a laser diffraction and scattering particle size distribution analyzer.

A material constituting the ion conductor for recovering lithium ions preferably has a structure of crystal, glass ceramic, and amorphous glass. As the crystal, a natrium super ionic conductor (NASICON) type crystal structure, a lithium super ionic conductor (LISICON) type crystal structure, a perovskite type crystal structure, or a garnet type crystal structure is preferred.

A material having the NASICON type crystal structure is preferably Li_{3.5}Zn_{0.25}GeO₄, a material having the LISICON type crystal structure is preferably Li_{3.5}Zn_{0.25}GeO₄, a material having the perovskite type crystal structure is preferably La_{0.55}Li_{0.35}TiO₃, and a material having the garnet type crystal structure is preferably Li₇La₃Zr₂O₁₂ (LLZ).

The lithium-containing oxide is preferably an oxide containing at least one metal atom selected from La, Zr, Ti, Al, and Si as a metal other than Li. As such a lithium-containing oxide, specifically, lithium lanthanum titanate: (Liₓ,La_{y})TiO_{z} (here, x = 3a - 2b, y = 2/3 - a, z = 3 - b, 0 < a ≤ 1/6, 0 ≤ b ≤ 0.06, x > 0) (hereinafter, LLTO) can be used, more specifically, Li_{0.29}La_{0.57}TiO₃ (a ≈ 0.1, b ≈ 0) can be used, further, LiₓLa_{y}Zrₘ₁M^{a}ₘ₂O_{z} (in the formula, M^{a} is at least one element selected from Al, Mg, Ca, Sr, V, Nb, Ta, Ti, Ge, In, and Sn; x is a number of 5 to 10; y is a number of 1 to 4; m1 is a number of 1 to 4; m2 is a number of 0 to 2; and z is a number of 5 to 20), LiₓBₘ₁M^{b}ₘ₂O_{z} (in the formula, M^{b} is at least one atom selected from C, S, Al, Si, Ga, Ge, In, and Sn; m2 is a number of 0 to 5; m1 is a number of 0 to 1; zc is a number of 0 to 1; and z is a number of 0 to 6), Liₓ(Al,Ga)ₘ₁(Ti,Ge)ₘ₂Siₘ₃Pₘ₄O_{z} (in the formula, x is a number of 1 to 3; m1 is a number of 0 to 1; m2 is a number of 1 to 2; m3 is a number of 0 to 1; m4 is a number of 1 to 7; and z is a number of 1 to 13), and Li₍₃₋₂ₓ₎M^{a}ₘ₁D^{a}ₘ₂O (in the formula, x represents a number of 0 or more and 0.1 or less, M^{a} represents a divalent metal atom, D^{a} represents a halogen atom, m1 represents a number of 0 to 0.1, and m2 represents a number of 1 to 5) can be used.

More specifically, at least one oxide selected from Li₃PO₄, Li-La-Zr-O (LLZO), Li-La-Ti-O (LLTO), and Li-Al-Si-P-Ti-Ge-O (LASiPTiGeO) is preferred. These materials can be obtained, for example, as a sintered body obtained by mixing particles formed of the corresponding material with a sintering aid and sintering the mixture at a high temperature (1000°C or higher). In this case, a surface of the lithium selective permeable membrane 10 can also be configured as a porous structure in which fine particles formed of LLTO are bonded (sintered), so that an effective area of the surface of the ion conductive layer can be increased.

The lithium-containing oxynitride is preferably an oxynitride containing at least one metal atom selected from La, Zr, Ti, Al, and Si as a metal other than Li. The lithium-containing oxynitride is preferably at least one oxynitride selected from LiM^{a}ON (in the formula, M^{a} represents at least one atom selected from Si, B, Ge, Al, C, and Ga), lithium oxynitride phosphate (Li₃PON, hereinafter also referred to as "LiPON"), a nitride of LLTO (LLTON), a nitride of LLZO (LLZON), and a nitride of LASiPTiGeO (LASiPTiGeO-N).

Further, the material constituting the ion conductor is preferably a compound having a silicon atom, a sulfur atom, a phosphorus atom, or the like, and examples thereof include lithium phosphate (Li₃PO₄), LiPOM¹ (M¹ represents at least one selected from Ti, V, Cr, Mn, Fe, Co, Ni, Cu, Zr, Nb, Mo, Ru, Ag, Ta, W, Pt, and Au), LiₓSiₘ₁O_{z} (in the formula, x represents a number of 1 to 5, m1 represents a number of 0 to 3, and z represents a number of 1 to 10), LiₓSₘ₁O_{z} (x represents a number of 1 to 3, m1 represents a number of 0 to 2, and z represents a number of 1 to 10), Li₃BO₃-Li₂SO₄, Li₂O-B₂O₃-P₂O₅, Li₂O-SiO₂, and Li₆BaLa₂Ta₂O₁₂.

The ion conductor for recovering lithium ions contains lithium as one of constituent elements thereof, and lithium ions outside the crystal migrate between lithium sites in the crystal, thereby exhibiting ion conductivity. The lithium ions flow in the ion conductive layer, and sodium ions and water cannot flow in the ion conductive layer. At this time, lithium ions (Li⁺) conduct in the crystal. Therefore, it is preferable that, in the ion conductive layer, when the ion conductor formed of an inorganic substance is present substantially continuously between a surface of the ion conductive layer on the treatment liquid side and a surface of the ion conductive layer on the recovery liquid side, ions migrate in the ion conductive layer, and the ions to be recovered easily migrate from the treatment liquid to the recovery liquid.

### (Particle Layer)

As described above, the ion conductive layer preferably contains at least one of a particle layer containing ion conductor particles and a thin film layer. Here, the ion conductive layer may be one layer or a combination of two or more particle layers, may be one layer or a combination of two or more thin film layers. Among these, it is preferable that the ion conductive layer contains both the particle layer and the thin film layer in which one or more particle layers and one or more thin film layers are combined. At least one of the particle layer and the thin film layer provided in the ion conductive layer is preferably a layer that substantially allows only ions to be recovered to permeate.

When the ions to be recovered are lithium ions, the particle layer is preferably a layer containing an oxide ion conductor such as the lithium-containing oxide described above, a layer containing an oxynitride ion conductor such as the lithium-containing oxynitride described above, or a lithium ion conductive glass (glass formed of the ion conductor for recovering lithium ions described above). The particle layer preferably has a function of improving not only the conductivity of the ions to be recovered but also the adhesion of the thin film layer to be described later.

The layer containing an oxide ion conductor and the layer containing an oxynitride ion conductor can be formed by, for example, dispersing a lithium-containing oxide, such as powder LLTO or LLTON, and a lithium-containing oxynitride in a solvent together with a binder, a viscosity modifier, and a dispersant to prepare a coating liquid, then coating a principal surface of a support layer with the coating liquid, and drying, heating and melting the coating liquid to form a particle layer. The oxide and the oxynitride may be subjected to surface modification in advance in order to improve dispersibility and denseness of the layer. Examples of the surface modification that contributes to the improvement of dispersibility and denseness include surface modification using a silane coupling agent, a titanate coupling agent, an aluminate coupling agent, or dopamine hydrochloride. In addition, the particle layer may be formed by further adding an ion conductive monomer and a polymerization initiator to the coating liquid, coating the principal surface of the support layer with the coating liquid, and irradiating the principal surface with heat or energy rays to form a film.

In order to improve the denseness of the particle layer, gaps and pores in the particle layer can be filled by impregnating and curing the gaps and the pores in the particle layer with an impregnating agent such as a methacrylic acid ester and a curing agent by vacuum impregnation. By doing so, the number of gaps and pores in the particle layer can be reduced, and thus the densification of the particle layer can be improved.

In addition, the denseness of the particle layer can be improved by pressing the particle layer at a high temperature. The vacuum impregnation and the high-temperature pressing may be performed together.

As the binder, a general-purpose binder can be used without particular limitation, and for example, a fluorine-containing resin such as a polyvinyl alcohol resin (PVA), an acrylic resin, a polyolefin resin, a polycarbonate resin, or a polyvinylidene fluoride resin, or a thermoplastic resin such as a copolymer of monomers of these resins can be preferably used. Since the particle layer is formed using a coating liquid containing a binder and the like in addition to the ion conductor, it can be said that the particle layer is a layer containing an organic substance such as the thermoplastic resin described above, that is, the ion conductive layer is a layer containing the ion conductor formed of an inorganic substance and an organic substance such as the thermoplastic resin. In order to enhance the ion conductivity of the binder, for example, a lithium salt such as lithium perchlorate, lithium hexafluorophosphate, or lithium bis(trifluoromethanesulfonyl)imide may be added.

As the viscosity modifier, the dispersant, and the solvent, general-purpose ones can be used as long as they do not significantly inhibit the performance of the ion selective permeable membrane according to the present embodiment, the ion conductive monomer can be appropriately selected according to the ions to be recovered, and the polymerization initiator can be appropriately selected according to a polymerization method.

A layer thickness of the particle layer is preferably 1 µm or more, more preferably 10 µm, and even more preferably 100 µm, from the viewpoint of exhibiting ion selectivity and water resistance. In addition, from the viewpoint of further inhibiting the occurrence of cracks and the like and improving the ion recovery efficiency, the layer thickness is preferably 1 mm or less, more preferably 500 µm or less, and even more preferably 300 µm or less.

### (Thin Film Layer)

The thin film layer that can be used for forming the ion conductive layer is preferably a layer containing the lithium-containing oxide or the lithium-containing oxynitride described above as the ion conductor. The thin film layer preferably has a function of selectively allowing ions such as target lithium ions to permeate without allowing ions other than water and ions to be recovered to permeate.

In addition, since the treatment liquid and the recovery liquid exhibit strong alkalinity, the ion conductive layer preferably has alkali resistance.

When the ions to be recovered are lithium ions, the thin film layer is preferably a layer containing an oxide ion conductor such as the lithium-containing oxide described above, or a layer containing an oxynitride ion conductor such as the lithium-containing oxynitride described above, and the thin film layer is preferably a dense film, from the viewpoint of improving the property of not allowing water to permeate. Therefore, the thin film layer is preferably a layer formed by vapor deposition including sputtering or plating, and is more preferably a vapor deposition film.

A layer thickness of the thin film layer is preferably 20 nm or more, more preferably 100 nm or more, and even more preferably 200 nm or more, from the viewpoint of exhibiting ion selectivity and water resistance, and is preferably 10 µm or less from the viewpoint of the ion recovery rate.

### (Alkali-resistant Layer)

The ion selective permeable membrane according to the present embodiment may include an alkali-resistant layer because the treatment liquid and the recovery liquid exhibit strong alkalinity. When providing an alkali-resistant layer, the alkali-resistant layer may be provided over an entire surface of one principal surface of the ion conductive layer, or may be provided on a part of or in a sea-island shape on the principal surface of the ion conductive layer, and is preferably provided over the entire surface of the ion conductive layer.

The alkali-resistant layer is preferably a layer containing at least one selected from a metal oxide and a metal oxynitride.

For example, in the case of recovering lithium ions, an alkali-resistant layer that adsorbs lithium ions (excluding hydrates) in a recovery liquid containing lithium ions may be formed on the surface of the ion selective permeable membrane. Preferred examples of the alkali-resistant layer include a layer formed by modifying the surface of the ion conductive layer, or a layer formed of a metal oxide or a metal oxynitride having excellent chemical durability, as described later.

The metal oxide is preferably at least one metal oxide selected from Al₂O₃, ZrO₂, SiO₂, and TiO₂. The metal oxynitride is preferably at least one metal oxynitride selected from Si₃N₄, GaN, TiN and Li₃N₂.

The alkali-resistant layer can be formed as a thin layer on the surface of the ion conductive layer, for example, by performing a chemical treatment on the ion conductive layer. Specifically, the alkali-resistant layer can be formed by subjecting one principal surface of the ion conductive layer described above to an acid treatment, for example, exposing the principal surface to hydrochloric acid or nitric acid for 5 days. It is presumed that by this treatment, in the case of using, for example, lithium lanthanum titanate (LLTO) as the ion conductor, a material layer (HLTO) is formed to have a composition close to H_{0.29}La_{0.57}TiO₃ obtained by substituting lithium, which is particularly easily oxidized among the constituent elements in the LLTO, with hydrogen in an acid, and the material layer functions as the alkali-resistant layer.

The alkali-resistant layer can also be formed by sputtering in the same manner as the thin film layer described above. Specifically, the alkali-resistant layer can be formed by using an ion conductor as a target and forming a film with a gas containing argon or nitrogen.

Since an H site in HLTO is originally a site into which lithium is introduced, H is particularly easily substituted with a lithium ion, and is hardly substituted with other ions (sodium ion, etc.). Therefore, HLTO functions as a layer that adsorbs lithium. In addition, since HLTO is generated by a reaction with an acid, HLTO is formed only on the outermost surface of the ion conductive layer.

The alkali-resistant layer in the ion selective permeable membrane having the configuration (I) is a layer that can be formed in the same manner as the ion adsorption layer in the ion selective permeable membrane having the configuration (II) to be described later. That is, the alkali-resistant layer is a layer having alkali resistance, and at the same time, can also be a layer having excellent ion adsorption performance particularly capable of adsorbing only a large amount of lithium ions on the surface of the ion conductive layer. Therefore, when the ion selective permeable membrane having the configuration (I) according to the present embodiment includes the alkali-resistant layer, the ion selective permeable membrane not only has resistance to alkalinity but also has excellent ion adsorption performance, and thus the conduction efficiency of lithium ions (ion current flowing through the ion conductive layer) can be improved.

### (Electrode)

The ion selective permeable membrane having the configuration (I) according to the present embodiment may further include one or more selected from an electrode and a catalyst on at least one principal surface side of the ion conductive layer. Therefore, the ion selective permeable membrane having the configuration (I) according to the present embodiment may have the "configuration (II) in which at least one selected from an electrode and a catalyst is provided on at least one principal surface side of the ion conductive layer", that is, the ion selective permeable membrane according to the present embodiment may have the configuration (I) and the configuration (II) described above.

The ion selective permeable membrane shown in Fig. 2 includes the ion conductive layer 3 on one principal surface side of the support layer 2, and includes the electrode 11 on a principal surface side opposite to the one principal surface on which the ion conductive layer 3 is provided. Further, the electrode 11 is also provided on the principal surface side of the support layer 2 on which the ion conductive layer 3 is provided. The ion selective permeable membrane shown in Fig. 2 includes two support layers 2, and the support layers 2 can be said to be the same. As described above, another electrode 11 may be provided on the principal surface side of the ion conductive layer opposite to the principal surface side on which the electrode 11 is provided. As described above, the support layer 2 in contact with the electrode 11 does not need to have electron conductivity and ion conductivity, and may be an insulator having neither electron conductivity nor ion conductivity.

As shown in Fig. 2, the electrodes are preferably provided on a right surface (one principal surface) and a left surface (the other principal surface) of the ion conductive layer, and with this configuration, a right surface and a left surface of the ion selective permeable membrane are maintained at a constant positive potential and a constant negative potential, respectively. It is preferable that the electrode on the right surface serves as an anode and the electrode on the left surface serves as a cathode.

As a material used for these electrodes, a carbon felt, a carbon sheet, a metal non-woven fabric, a metal mesh body, and the like are preferred.

The electrode may be formed in a form of a metal thin film formed in a mesh shape by patterning so as to have a hole in the principal surface of the ion selective permeable membrane.

As the metal non-woven fabric, the metal mesh body, and the metal thin film, those formed of a metal material that does not cause an electrochemical reaction in the lithium ion treatment liquid or the recovery liquid and that has resistance to alkalinity are preferably used. Examples of such a metal material include SUS, Ti, Ti-Ir, Ni, Pt, Au, Ag, and a Pd alloy.

In addition, a catalyst layer to be described later may be provided on the surface of the ion conductor, and the electrode may be formed thereon.

It is known that the material used as the ion selective permeable membrane is solid but exhibit conductivity since lithium ions flow in the crystal in a form close to free electrons.

In the configuration shown in Fig. 2, when setting the anode to a positive potential and the cathode to a negative potential and, for example, selectively recovering lithium ions, those having reached the right surface of the ion conductive layer, among lithium ions (positive ions) in the lithium ion treatment liquid on an anode side, flow from the right surface to the left surface of the ion selective permeable membrane by ion conduction. The lithium ions that have reached the left surface of the ion selective permeable membrane are recovered in the recovery liquid. Therefore, after a predetermined time has elapsed, a lithium ion concentration in the treatment liquid decreases, and the lithium ion concentration in the recovery liquid increases.

Metal ions cannot permeate through the ion conductive layer and reach the recovery liquid unless the treatment liquid containing the metal ions is in contact with the ion conductive layer. Therefore, it is not preferable that the surface of the ion conductive layer is covered with an electrode and a catalyst.

From this viewpoint, as described above, the electrode preferably has solution permeability in itself, such as a carbon felt, a carbon sheet, or a metal non-woven fabric, and a metal thin film formed in a mesh shape by patterning is also preferred. Alternatively, a porous electrode may be formed by forming an electrode on a porous support layer.

In the case of being formed in a mesh shape, a thickness of the electrode is preferably 20.0 mm or more, more preferably 50.0 mm or more, and even more preferably 80.0 mm or more, from the viewpoint of the ion recovery effect, and is preferably 200.0 mm or less, more preferably 150.0 mm or less, and even more preferably 120.0 mm or less, from the viewpoint that the ion conductive layer and the treatment liquid can come into contact with each other.

In the case of being formed in a mesh shape, a line width of the electrode is preferably 20.0 µm or more, more preferably 100.0 µm or more, and even more preferably 150.0 µm or more, from the viewpoint of the ion recovery effect, and is preferably 500.0 µm or less, more preferably 300.0 µm or less, and even more preferably 250.0 µm or less, from the viewpoint of the ease of contact between the ion conductive layer and the treatment liquid.

In the case of being formed in a mesh shape, a mesh size of the electrode is preferably 1.0 mm or more, more preferably 2.0 mm or more, and even more preferably 3.0 mm or more, and is preferably 20.0 mm or less, more preferably 10.0 mm or less, and even more preferably 8.0 mm or less, from the viewpoint of the ion recovery effect.

### (Catalyst)

As described above, the ion selective permeable membrane having the configuration (I) according to the present embodiment may further include a catalyst on at least one principal surface side of the ion conductive layer.

The catalyst is provided on at least one principal surface side of the ion conductive layer, and is preferably provided when an electrode is provided. When the catalyst is provided in combination with the electrode, the catalyst is preferably present between the ion conductive layer and the electrode.

The catalyst is preferably a catalyst having a property of inhibiting an overvoltage (hydrogen overvoltage) required for generation of a gas such as hydrogen. As will be described later, when a voltage is applied to the electrode, decomposition of water occurs on the surface of the electrode, and a gas is generated. For example, hydrogen is generated in the cathode. When the overvoltage (hydrogen overvoltage) required for the generation of hydrogen is high, the recovery of ions to be recovered cannot be performed unless a potential is higher, or a recovery speed becomes slow, whereby the recovery of ions may be hindered. Therefore, by using a catalyst capable of inhibiting the overvoltage, the ion recovery efficiency can be improved.

The catalyst preferably contains, for example, nickel, cobalt, molybdenum, tungsten, iron, tin, iridium, ruthenium, cerium, lanthanum, zinc, gold, or platinum. In order to make direct contact with the treatment liquid, nickel, tin, platinum, gold, iridium, palladium, and ruthenium, which are resistant to alkalinity, are preferably contained, and at least one of these is preferably contained. In particular, a catalyst containing nickel is preferred.

The catalyst that can be used for the anode is preferably Pt, Co, CoMo, CoW, CoFeNi, Fe, FeMo, Mo, Ni, NiCo, NiFe, NiMo, NiMoCo, NiMoCo, NiMoFe, NiSn, or NiW. As the catalyst on the cathode, Ir, IrO₂, Ru, RuO₂, Co, CoOx, Cu, CuOx, Fe, FeOx, FeOOH, FeMn, Ni, NiOx, NiOOH, NiCo, NiCe, NiC, NiFe, NiCeCoCe, NiLa, NiMoFe, NiSn, NiZn, SUS, Au, and Pt are preferred.

The catalyst is preferably in contact with the ion conductive layer and the electrode, and is preferably in a form of a layer to cover the electrode. Alternatively, an entire surface of the catalyst may not be covered, and a part of the catalyst may be covered such that the catalyst is in contact with a liquid.

The catalyst is not particularly limited as long as the catalyst is provided on at least one principal surface side of the ion conductive layer. Examples of a form that the catalyst and the electrode can take include forms 1A to 9A shown in Figs. 3 to 5.

In the case of a form in which the catalyst covers the electrode, the catalyst together with the electrode may be provided on at least one principal surface of the ion conductive layer, or the catalyst may be provided between the electrode and the ion conductive layer or may not be provided between the electrode and the ion conductive layer.

The catalyst is preferably in contact with the ion conductive layer and the electrode, or may be provided so as to cover an entire surface of the ion conductive layer, or may be provided so as to cover a part of the ion conductive layer such that the ion conductive layer is in contact with the treatment liquid.

As shown in Fig. 3, the covering may be performed not only in a form (form 1A) in which only the electrode 11 is covered, but also in a form (form 2A) in which the electrode 11 and the ion conductive layer 3 are covered, in a form (form 3A) in which the electrode 11 and the support layer 2 to be described later are covered, or in a form (form 4A) in which the electrode 11 and the alkali-resistant layer 4 are covered.

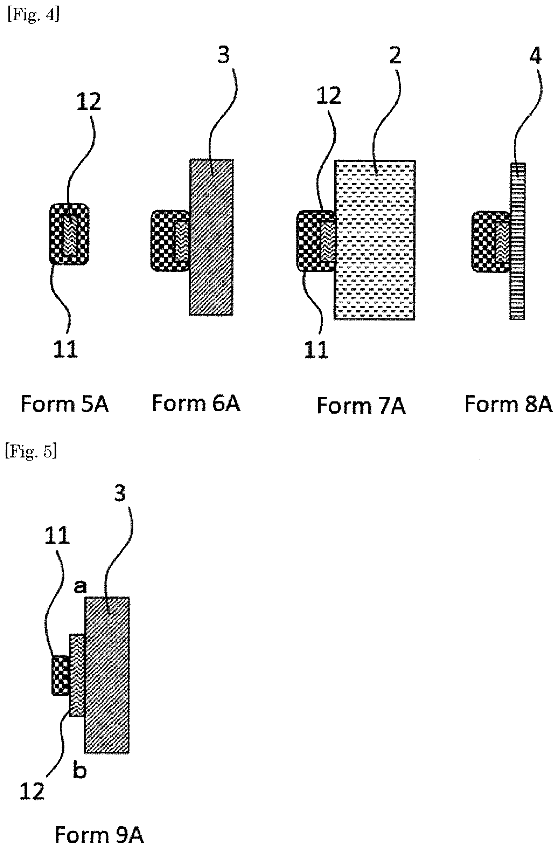

As shown in Fig. 4, a form (form 5A) in which the catalyst 12 is incorporated in the electrode 11, a form (form 6A) in which the catalyst 12 is present between the electrode 11 and the ion conductive layer 3, a form (form 7A) in which the catalyst is present between the electrode 11 and the support layer 2, and a form (form 8A) in which the catalyst 12 is present between the electrode 12 and the alkali-resistant layer 4, each being a form in which a part of the catalyst 12 is covered, may be adopted.

In addition, as the form in which a part of the catalyst 12 is covered, a form in which the catalyst 12 is present between the electrode 11 and the ion conductive layer 3 and is in direct contact with the treatment liquid or the like may be adopted, as in the form 9A shown in Fig. 5.

Further, the catalyst may be provided in contact with the ion conductive layer and the electrode, or may be in contact with the support layer or the alkali-resistant layer.

The catalyst may be supported on the principal surface of the ion conductive layer by a dry plating method (sputtering, etc.), coating, or screen printing, or may be supported by a method of coating and forming a film on the surface of the electrode. After the electrode is formed on the ion conductive layer, the support layer, or the alkali-resistant layer, the catalyst may be supported by forming a film by coating or printing, or the electrode may be provided after the catalyst is supported by dry plating method (sputtering, etc.), coating, or screen printing.

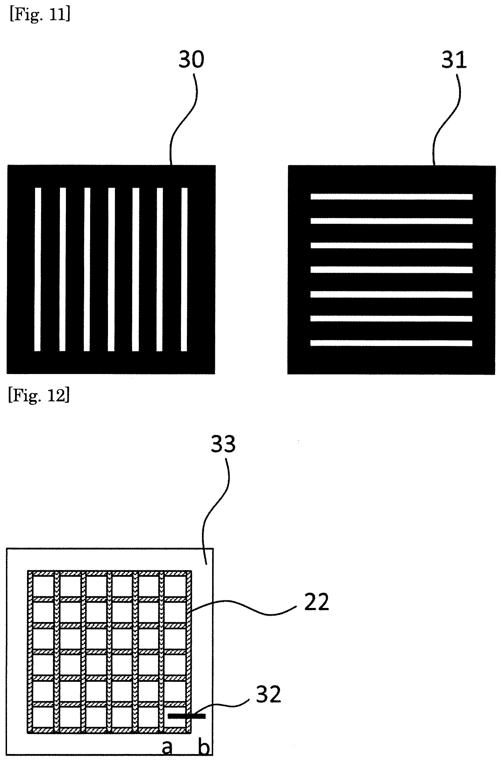

The catalyst may be provided so as to cover the entire surface of the ion conductive layer on at least one principal surface side, may be provided in accordance with a shape of the electrode, or may be formed by patterning (for example, in a mesh shape shown in Fig. 12) so as to have holes in the principal surface of the ion selective permeable membrane such that the ion conductive layer and the treatment liquid can come into contact with each other.

When the catalyst is used in a form of a layer, a layer thickness of the catalyst is preferably 1 nm or more, more preferably 5 nm or more, and even more preferably 10 nm or more, from the viewpoint of not inhibiting the conductivity of the electrode, and is preferably 100 nm or less, more preferably 50 nm or less, and even more preferably 30 nm or less, from the viewpoint of production constraints and exhibition of the effect of voltage application to the electrode.

In the case of being formed in a mesh shape as shown in Fig. 12, a line width of the catalyst is preferably wider than that of the electrode as shown in Fig. 5, from the viewpoint of the ion recovery effect, and is preferably 1.5 times or more, more preferably 2.0 times or more, and even more preferably 2.3 times or more, and is preferably 4.0 times or less, more preferably 3.0 times or less, and even more preferably 2.8 times or less, with respect to the line width of the electrode, from the viewpoint of ease of contact between the ion conductive layer and the treatment liquid.

In the case of being formed in a mesh shape as shown in Fig. 12, a mesh size of the catalyst is preferably 1.0 mm or more, more preferably 2.0 mm or more, and even more preferably 3.0 mm or more, from the viewpoint of the ion recovery effect, and is preferably 20.0 mm or less, more preferably 10.0 mm or less, and even more preferably 8.0 mm or less, from the viewpoint of the ease of contact between the ion conductive layer and the treatment liquid.

The catalyst preferably covers the cathode in order to inhibit the hydrogen overvoltage, and also preferably covers the anode in order to inhibit generation of other gases. When the catalyst is provided on the anode side, the catalyst preferably has a property of inhibiting the generation of chlorine and oxygen. When the catalyst is provided on the cathode side, the catalyst, the ion conductor, and the treatment liquid are preferably in contact with each other. When the catalyst is provided on the anode, the catalyst, the ion conductor, and the recovery liquid are preferably in contact with each other. With such a configuration, the overvoltage can be inhibited.

In addition, the catalyst may be present in a state of being supported on the support layer or the alkali-resistant layer.

### (Layer Configuration of Ion Selective Permeable Membrane)

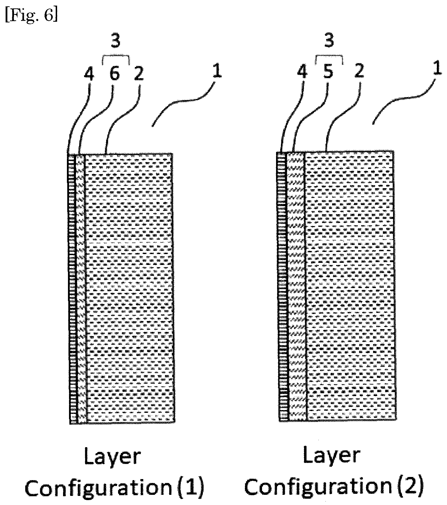

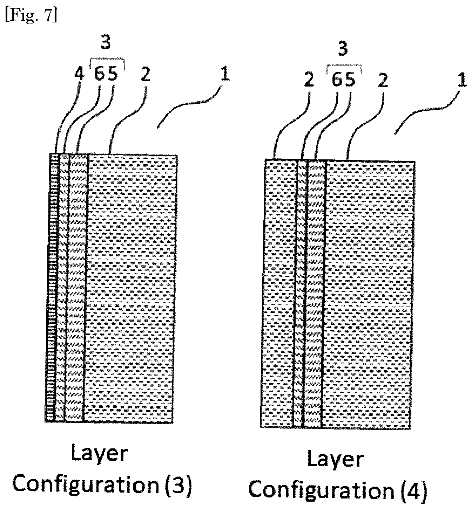

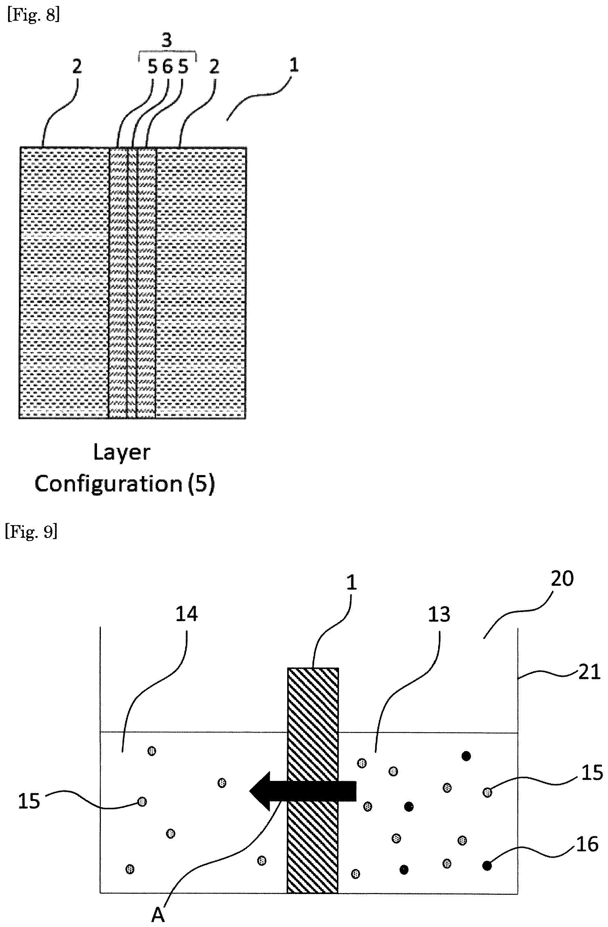

Examples of a layer configuration of the ion selective permeable membrane 1 include a layer configuration (1) in Fig. 6 in which only one thin film layer 6 is provided as the ion conductive layer on the support layer 2, a layer configuration (2) in Fig. 6 in which only one particle layer 5 is provided as the ion conductive layer on the support layer 2, a layer configuration (3) in Fig. 7 in which only one particle layer 5 and only one thin film layer 6 are provided as the ion conductive layer on the support layer 2, and layer configurations (4) and (5) in Figs. 7 and 8 in which two support layers are provided and the ion conductive layer is sandwiched between the support layers.

The layer configuration (3) is preferred when the ion recovery rate is important, because the alkali-resistant layer 4 is in direct contact with the treatment liquid. In addition, when the ion selective permeable membrane is installed in an ion recovery device, a pressure is applied such that the recovery liquid does not enter the recovery liquid from an installation portion of the ion selective permeable membrane. In order to protect the ion conductive layer from the pressure, it is preferable to include two support layers 2 on both principal surfaces of the ion conductive layer as in the layer configuration (4) and the layer configuration (5). Further, when an electrode is installed, it is preferable to provide a support layer between the ion conductive layer and the electrode such that the ion conductive layer is not damaged by the electrode.

### (Ions)

The ions selectively allowed to permeate through the ion selective permeable membrane according to the present embodiment are ions to be recovered by an ion recovery device to be described later using the ion selective permeable membrane.

The ions to be recovered are preferably a metal ion which is a cation in which a metal atom has lost an electron, is preferably an ion of a typical metal or an ion of a transition metal, is more preferably an ion of an alkali metal, an ion of an alkaline earth metal, an ion of a magnesium group metal, an ion of an aluminum group metal, an ion of a rare earth group metal, an ion of an iron group metal, an ion of a chromium group metal, an ion of a manganese group metal, an ion of a noble metal, an ion of a platinum group metal, an ion of a lanthanide metal, or an ion of an actinoid metal, is even more preferably an ion of an alkali metal, an ion of an alkaline earth metal, an ion of a noble metal, an ion of a platinum group metal, an ion of a lanthanide metal, or an ion of an actinoid metal, is still more preferably an ion of an alkali metal, and is even still more preferably a lithium ion or a sodium ion. Lithium ions are particularly preferred considering that with the ion exchange membrane described in PTL 1, selective recovery is difficult in terms of ion radius, and the lithium ions can be recovered only by using the ion selective permeable membrane according to the present embodiment.

### [Configuration (II)]

In the configuration (II) of the ion selective permeable membrane according to the present embodiment, an ion conductive layer containing an ion conductor formed of an inorganic substance is provided, and (II) at least one selected from an electrode and a catalyst is provided on at least one principal surface side of the ion conductive layer. Since the ion selective permeable membrane having the configuration (II) also includes the ion conductive layer containing the ion conductor formed of an inorganic substance similar to the configuration (I), ions having a small ion radius, which are allowed to permeate through the ion exchange membrane as described in PTL 2, are not allowed to permeate through the ion selective permeable membrane having the configuration (II), and thus ions to be recovered can be selectively recovered.

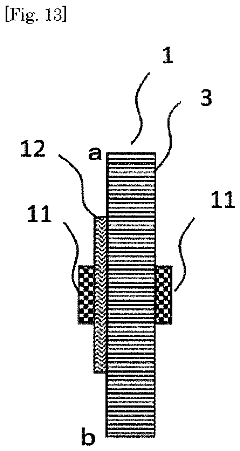

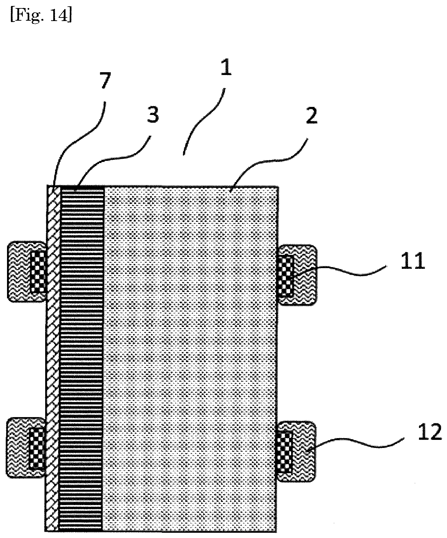

The ion selective permeable membrane 1 shown in each of Figs. 13 and 14 shows an example of a preferable configuration of the configuration (II) of the ion selective permeable membrane according to the present embodiment. The ion selective permeable membrane 1 having the configuration (II), which is shown in each of Figs. 13 and 14, includes the ion conductive layer 3 containing an ion conductor formed of an inorganic substance, includes the electrode 11 and the catalyst 12 on at least one principal surface side of the ion conductive layer 3, and includes only the electrode 11 on a principal surface side opposite to the one principal surface side. As described above, the ion selective permeable membrane 1 having the configuration (II) according to the present embodiment may include only the electrode 11, may include only the catalyst 12, or may include the electrode 11 and the catalyst 12, on one principal surface side of the ion conductive layer 3. As shown in Figs. 13 and 14, an electrode other than the electrode 11 may be provided on the principal surface side opposite to the one principal surface side. Further, the catalyst 12 may also be provided on the principal surface side opposite to the principal surface side on which the other electrode is provided.

The ion selective permeable membrane 1 shown in Fig. 14 includes the electrodes 11 covered with the catalyst 12 on both principal surface sides of the ion conductive layer 3 containing the ion conductor formed of an inorganic substance. Further, it is shown that the support layer 2 and a porous body protective layer 7 are provided as necessary.

Similar to the ion selective permeable membrane having the configuration (I) described above, the ion selective permeable membrane having the configuration (II) according to the present embodiment also has a function of selectively allowing ions such as target lithium ions to permeate without allowing water to permeate by the function of the ion conductive layer.

The thickness of the ion selective permeable membrane is also the same as that of the ion selective permeable membrane having the configuration (I).

### <Ion Conductive Layer>

The ion selective permeable membrane having the configuration (II) according to the present embodiment includes the ion conductive layer containing the ion conductor formed of an inorganic substance, similarly to the ion selective permeable membrane having configuration (I). The function of the ion conductive layer in the ion selective permeable membrane having the configuration (II) is the same as that of the ion conductive layer in the configuration (I).

A film thickness of the ion conductive layer in the configuration (II) is preferably 20 nm or more, more preferably 50 nm or more, and even more preferably 100 nm or more, from the viewpoint of exhibiting ion selectivity. In addition, from the viewpoint of further inhibiting the occurrence of cracks and the like and improving the ion recovery efficiency, the film thickness is preferably 1 mm or less, more preferably 500 µm or less, and even more preferably 300 µm or less.

### (Ion Conductor)

Examples of the ion conductor formed of an inorganic substance and used in the ion conductive layer include the same ion conductors as those used in the ion selective permeable membrane having the configuration (I). In addition, as the ion conductor, a lithium-containing oxide and a lithium-containing oxynitride are preferred, and a compound having a silicon atom, a sulfur atom, a phosphorus atom, or the like is also preferred.

### (Ion Adsorption Layer)

The ion conductive layer preferably includes an ion adsorption layer on at least one principal surface side thereof. A lithium ion adsorption layer that adsorbs lithium ions will be described as an example of the ion adsorption layer. When the ion conductive layer includes a lithium ion adsorption layer, particularly, only lithium ions can be adsorbed on the surface of the ion conductive layer in a large amount. Since water molecules on hydrated lithium ions are removed during the adsorption and only lithium ions are present, the conduction efficiency of the lithium ions (ion current flowing through the ion conductive layer) can be increased. Therefore, in the case where the ion conductive layer includes the ion adsorption layer, it is preferable to dispose the principal surface side on which the ion adsorption layer is provided on a treatment water side.

The ion adsorption layer can be formed by the same method as that of the alkali-resistant layer in the ion selective permeable membrane having the configuration (I), that is, a method of forming a thin film by a chemical treatment, a method of forming a thin film by using a metal oxide or a metal oxynitride having excellent chemical durability, a method of forming a thin film by sputtering, or the like. That is, the ion adsorption layer in the ion selective permeable membrane having the configuration (II) has the same configuration as that of the alkali-resistant layer in the ion selective permeable membrane having the configuration (I), and also serves as a layer functioning as the alkali-resistant layer.

In addition, ion adsorption coating or surface modification may be applied to a powder of the oxide or the oxynitride described above, which is an ion conductor. As the surface modification, a powder of an oxide or an oxynitride as an ion conductor is immersed in an acidic aqueous solution, for example, an inorganic acid such as hydrochloric acid or nitric acid, while being stirred for several days (for example, 1 to 10 days, preferably 3 to 6 days), and then washed and dried, whereby the ion adsorption property can be imparted. By using the ion conductor thus obtained, a particle layer can also be formed as the coating liquid described above.

### (Electrode)

When providing an electrode on the ion selective permeable membrane having the configuration (II) according to the present embodiment, the electrode is provided on at least one principal surface side of the ion conductive layer.

Specifically, as shown in Figs. 13 and 14, another electrode 11 may be provided on a principal surface side of the ion conductive layer 3 opposite to the principal surface side on which the electrode 11 is provided, that is, the electrodes 11 may be provided on both principal surface sides of the ion conductive layer 3. In addition, as shown in Figs. 13 and 14, the electrodes 21 are preferably provided on a right surface side (one principal surface) and a left surface side (the other principal surface) of the ion conductive layer 3, and with this configuration, the right surface and the left surface of the ion selective permeable membrane are maintained at a constant positive potential and a constant negative potential, respectively. It is preferable that the electrode on the right surface serves as an anode and the electrode on the left surface serves as a cathode.

A material used for the electrode, a method of forming the electrode, a dimension such as a line width in the case of being formed in a mesh shape, and the like are the same as those described as the electrode provided in the ion selective permeable membrane having the configuration (I).

### (Catalyst)

When providing a catalyst on the ion selective permeable membrane having the configuration (II) according to the present embodiment, the catalyst is provided on at least one principal surface side of the ion conductive layer. The catalyst may be provided alone as described above, or may be provided in combination with an electrode. In consideration of the performance of the catalyst to be described later, the catalyst together with the electrode is preferably provided. In this case, the catalyst is preferably provided between the ion conductive layer and the electrode.

As the properties of the catalyst, it is preferable that the catalyst has a property of inhibiting an overvoltage (hydrogen overvoltage) required for generation of a gas such as hydrogen, and it is the same as the ion selective permeable membrane having the configuration (I) that the ion recovery efficiency can be improved by using the catalyst capable of inhibiting the hydrogen overvoltage.

A type of the catalyst adopted in the ion selective permeable membrane having the configuration (II) according to the present embodiment is the same as the type of the catalyst that can be adopted in the ion selective permeable membrane having the configuration (I), and the catalyst may be selected as appropriate.

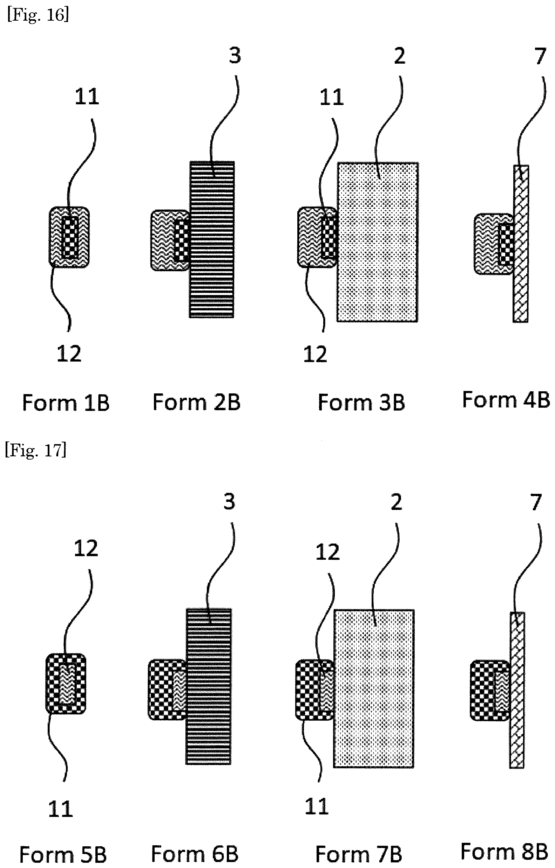

When providing the catalyst on the ion selective permeable membrane having the configuration (II), the catalyst is not particularly limited as long as the catalyst is provided on at least one principal surface side of the ion conductive layer, and examples of a form that the catalyst and the electrode can take include forms 1B to 9B shown in Figs. 16 to 18. As can be seen from the forms shown in these figures, regarding the relationship between the catalyst and the electrode, a form that the catalyst and the electrode can take in the configuration (II) is the same as the form that the catalyst and the electrode can take in the configuration (I).

In the case of a form in which the catalyst covers the electrode, the catalyst may be provided on at least one principal surface of the ion conductive layer together with the electrode, or the catalyst may be provided between the electrode and the ion conductive layer or may not be provided between the electrode and the ion conductive layer; and the catalyst is preferably in contact with the ion conductive layer and the electrode, may be provided so as to cover an entire surface of the ion conductive layer, or may be provided so as to cover a part of the ion conductive layer such that the ion conductive layer is in contact with the treatment liquid, which is the same as the form described in the ion selective permeable membrane having the configuration (I).

As shown in Fig. 16, the covering may be performed not only in a form (form 1B) in which only the electrode 11 is covered, but also in a form (form 2B) in which the electrode 11 and the ion conductive layer 3 are covered, a form (form 3B) in which the electrode 11 and the support layer 2 to be described later are covered, or a form (form 4B) in which the electrode 11 and the porous body protective layer 7 to be described later are covered.

As shown in Fig. 17, a form (form 5B) in which the catalyst 12 is incorporated in the electrode 11, a form (form 6B) in which the catalyst 12 is present between the electrode 11 and the ion conductive layer 3, a form (form 7B) in which the catalyst 12 is present between the electrode 11 and the support layer 2, and a form (form 8B) in which the catalyst 12 is present between the electrode 11 and the porous body protective layer 7, each being a form in which a part of the catalyst 12 is covered, may be adopted.

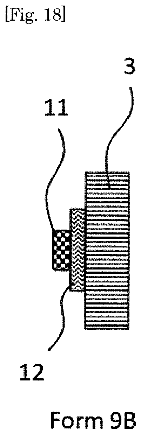

In addition, as the form in which a part of the catalyst 12 is covered, a form in which the catalyst 12 is present between the electrode 11 and the ion conductive layer 3 and is in direct contact with the treatment liquid or the like may be adopted, as in the form 9B shown in Fig. 18.

The catalyst can be formed by a method same as the method for forming the catalyst in the ion selective permeable membrane having the configuration (I). As a shape of the catalyst, the catalyst can be formed in a layer shape, or can be formed in a mesh shape by patterning as shown in Fig. 12.

Regarding the shape (dimension) of the catalyst, a layer thickness in the case of being formed in a layer shape is the same as the layer thickness in the ion selective permeable membrane having the configuration (I).

In the case of being formed in a mesh shape as shown in Fig. 12, a ratio of a line width of the catalyst to a line width of the electrode and a mesh size are the same as the line width and the mesh size of the ion selective permeable membrane having the configuration (I).

The line width of the catalyst in the case of being formed in a mesh shape is preferably 100.0 µm or more, more preferably 300.0 µm or more, and even more preferably 400.0 µm or more, from the viewpoint of the ion recovery effect from the viewpoint of the ion recovery effect, and is preferably 800.0 µm or less, more preferably 700.0 µm or less, and even more preferably 600.0 µm or less, from the viewpoint of the ease of contact between the ion conductive layer and the treatment liquid. An absolute value of the line width of the catalyst can also be applied to the ion selective permeable membrane having the configuration (I).

### (Support Layer)

The ion selective permeable membrane having the configuration (II) according to the present embodiment may include a support layer. As the support layer, a support layer adopted in the ion selective permeable membrane having the configuration (I) can be adopted. By providing the support layer, it is possible to further increase the size without reducing the recovery efficiency. When producing or attaching the ion selective permeable membrane on a device, local bending of the ion selective membrane can be prevented by the elasticity of the support layer. In addition, an effect of inhibiting aging deterioration of the ion conductor layer by reducing an area directly in contact with the liquid can also be expected.

When the support layer is provided on the ion selective permeable membrane having the configuration (II), a thickness of the support layer may be the same as that of the support layer in the ion selective permeable membrane having the configuration (I), and the thickness is preferably thicker. Specifically, in order to secure the strength, the thickness of the support layer is preferably 10 µm or more, more preferably 50 µm or more, and even more preferably 50 um or more. In addition, from the viewpoint of the ion recovery rate and from the viewpoint of handling when installing the ion selective permeable membrane in an ion recovery device to be described later, the thickness of the support layer is preferably 5 cm or less, more preferably 3 cm or less, and even more preferably 1 cm or less.

### (Porous Body Protective Layer)

The ion selective permeable membrane having the configuration (II) according to the present embodiment may further include a porous body protective layer. The porous body protective layer may have the same role as the support layer. When the ion selective permeable membrane is installed in an ion recovery device to be described later, an excessive load is applied to the ion permeable membrane. In order to protect the ion conductive layer from this load, it is preferable that the porous body protective layer is provided alone, or the porous body protective layer is provided together with the support layer.

From the same viewpoint, the ion selective permeable membrane having the configuration (I) may also include the porous body protective layer.

The porous body protective layer is preferably disposed between the ion conductive layer and the electrode on the principal surface side of the ion conductive layer opposite to the principal surface side on which the support layer is disposed. The material same as that of the support layer can be used for the porous body protective layer. Therefore, it can be said that a form having a porous body protective layer is a form having two support layers. The porous protective layer may be formed of a material same as that of the support layer, or may be formed of a material different from that of the support layer.

A layer thickness of the porous body protective layer is preferably 1 µm to 1 cm, more preferably 10 µm to 500 µm, and even more preferably 20 µm to 200 µm. When the layer thickness of the porous protective body is within the above range, the ion selective permeable membrane can be efficiently protected from a load when used in an ion recovery device.

### (Layer Configuration of Ion Selective Permeable Membrane)

The ion selective permeable membrane 1 having the configuration (II) according to the present embodiment can have the layer configurations (1) to (5) shown in Figs. 6 to 8, which are described as the layer configuration of the ion selective permeable membrane 1 having the configuration (I), regarding a relationship between the ion conductive layer 3 (the particle layer 5 and the thin film layer 6) and the support layer 2 and the ion adsorption layer (the alkali-resistant layer 4 in the figures) which are other layers and are provided as necessary.

The ion selective permeable membrane 1 having the configuration (II) according to the present embodiment can have, for example, a layer configuration in which at least one selected from an electrode and a catalyst is provided on at least one principal surface side of the ion conductive layer 3 in the layer configurations (1) to (5).

### (Ions)

The ions selectively allowed to permeate the ion selective permeable membrane according to the present embodiment are ions to be recovered by an ion recovery device to be described later using the ion selective permeable membrane. Other ions to be recovered are the same as those described in the ion selective permeable membrane having the configuration (I).

### (Strength of Ion Selective Permeable Membrane)

The ion selective permeable membrane having the configurations (I) and (II) according to the present embodiment is excellent in strength. As described above, when the ion selective permeable membrane is disposed in an ion recovery device, various stresses are applied to the ion selective permeable membrane. In addition, as the size of the ion selective permeable membrane increases, the load due to the stress increases. The ion selective permeable membrane according to the present embodiment is excellent in strength, and specifically, has excellent performance with respect to bending processing and tensile processing by a 90° bending test, a tensile test, or the like, and thus can respond to a demand for an increase in size.

The ion selective permeable membrane according to the present embodiment exhibits extremely excellent performance even in 90° bending. Specifically, in the 90° bending test shown in Examples to be described later, the ion selective permeable membrane is bent at 90° without cracks or the like.

In addition, the ion selective permeable membrane according to the present embodiment has tensile strength of 50 N or more, 60 N or more, and further 65 N or more, which has extremely high strength. Here, the tensile strength is measured by a measurement method in Examples to be described later.

As described above, the ion selective permeable membrane according to the present embodiment is excellent in 90° bending and tensile strength, can sufficiently withstand the use in an ion recovery device to be described later, and can sufficiently meet the demand for an increase in size. In the ion selective permeable membrane according to the present embodiment, it is effective to adopt the support layer or the porous body protective layer in order to meet the demand for particularly an increase in size.

### [Ion Recovery Device]

The ion recovery device according to the present embodiment includes the ion selective permeable membrane according to the present embodiment described above, that is, the ion selective permeable membrane having the configuration (I) or the ion selective permeable membrane having the configuration (II). Fig. 9 is a schematic diagram showing an example of a preferable configuration of a lithium recovery device according to the present embodiment.

A lithium recovery device 20 shown in Fig. 9 can recover lithium ions into a recovery liquid by moving, through the ion selective permeable membrane 1, lithium ions from a treatment liquid 13 containing lithium ions extracted from a treatment member or the like of a lithium secondary battery to a recovery liquid 14 which is an aqueous solution. The lithium recovery device 20 is a device that recovers target metal ions 15, and metal ion derivatives or metals from metal ions 15 to be recovered and ions 16 not to be recovered, which are contained in the treatment liquid 13.

As described above, the ion selective permeable membrane 1 preferably includes one or more selected from an electrode and a catalyst on at least one principal surface side of the ion conductive layer containing the ion conductor formed of an inorganic substance. When the ion selective permeable membrane includes both the electrode and the catalyst, the ions to be recovered contained in the treatment liquid 13 can be efficiently and selectively allowed to permeate through the ion selective permeable membrane 1 and moved to the recovery liquid 14 (described as A in Fig. 9), and the ions to be recovered can be recovered.

Regarding the electrode and the catalyst in the ion selective permeable membrane 1, it is preferable to have an electrode in contact with the ion conductive layer or the support layer or in extremely vicinity thereof, it is preferable to have a catalyst in contact with the electrode and the ion conductive layer or the support layer, and it is preferable that the catalyst is disposed in contact with the treatment liquid.

In addition to the electrode, a current collector may be used.

The ion recovery device 20 shown in Fig. 9 is an ion recovery device including the ion selective permeable membrane 1, in which the ion selective permeable membrane 1 which selectively allows the metal ions 15 to be recovered to permeate is provided in a treatment tank 21, and the ion selective permeable membrane 1 is installed in the treatment tank 21 so as to partition the treatment liquid 13 and the recovery liquid 14 with the treatment liquid 13 on one principal surface side and the recovery liquid 14 on the other principal surface side. Although not shown in Fig. 9, it is preferable that the ion selective permeable membrane having the configuration (I) and the configuration (II) includes an electrode disposed on one principal surface side of the ion selective permeable membrane 1 and an electrode disposed on the other principal surface side of the ion selective permeable membrane 1, that is, includes electrodes on both principal surface sides of the ion conductive layer, as described above.

In addition, the ion recovery device according to the present embodiment may further include a storage tank that stores the recovery liquid 14, a recovery tank that recovers lithium ions from the recovery liquid 14, and further a liquid feed pipe that connects the storage tank and the recovery tank, as necessary.

### (Treatment Liquid)

As the treatment liquid from which ions are recovered by the ion recovery device according to the present embodiment, seawater, salt-lake brine, wastewater generated in a lithium fractionation step in a lithium mine or the like or in a process of producing a lithium ion battery, a liquid generated in a treatment step for a used lithium ion battery, or the like can be used. In the case where the concentration is low or there is a floating substance affecting the recovery treatment, a pretreatment such as distillation or filtration can be performed in advance, or in the case where the pH is strongly acidic or strongly alkaline and there is a concern about corrosion of the device, pH adjustment can be performed in advance. In particular, when recovering lithium ions, it is preferable to adjust the treatment liquid such that the pH of the treatment liquid falls within a range of 10 or more and 15 or less from the start to the end of lithium recovery.

The adjustment of the pH of a lithium ion extract in pH control means may be performed at a stage before the lithium recovery, may be performed during the lithium recovery, or may be performed at any stage of the lithium recovery as long as there is no problem in achieving the object of the present invention. From the viewpoint of maintaining the performance and the like of the ion selective permeable membrane, it is preferable to adjust the pH of the lithium ion extract during the lithium recovery, it is preferable to adjust the pH of the lithium ion extract at least temporarily within the above range, that is, within a range of 10 or more and 15 or less during the lithium recovery, and it is particularly preferable to adjust the pH of the lithium ion extract within the above range from the start to the end of the lithium recovery.

### (Recovery Liquid)

Ion exchanged water or distilled water is preferably used as the recovery liquid, and an aqueous solution containing target ions may be used. As the recovery liquid is circulated and the ion recovery progresses, a concentration of ions to be recovered increases. In order to recover metal ions with high purity, the content of other ions is preferably small.

Alternatively, a separation tank for metal ions may be provided separately, and the metal ion concentration may be lowered by circulating the recovery liquid through the separation tank.

### (Shape, etc.)

A shape and a capacity of the treatment tank described above can be appropriately determined depending on the amount of the treatment liquid. In addition, the shape of the ion selective permeable membrane and the area of the principal surface may be determined according to the shape and the capacity of the treatment tank.

The shape of the treatment tank is not particularly limited as long as the treatment liquid and the recovery liquid are not directly mixed by the on selective permeable membrane, and may be a rectangular parallelepiped or a cube

The shape of the ion selective permeable membrane is preferably, for example, a planar shape as shown in Fig. 1.

The size thereof is determined according to the size of the device to which the ion selective permeable membrane is installed, and it is preferable that the contact area with the treatment liquid is large because the treatment speed increases. The area is preferably 100 cm² or more, more preferably 900 cm² or more, and even more preferably 1 m² or more, and is preferably 10 m² or less, more preferably 6 m² or less, and even more preferably 3 m² or less, from the viewpoint of production constraint and strength problems.

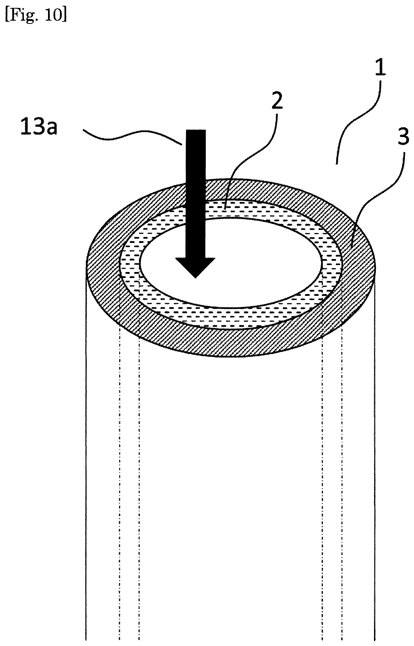

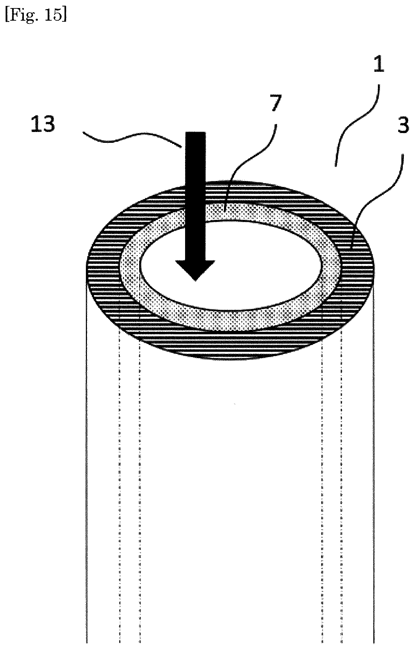

As shown in Figs. 10 and 15, the ion selective permeable membrane may have a tubular shape. The tubular shape may be a cylindrical shape as shown in Figs. 10 and 15, or may be a polygonal shape. In this case, the treatment liquid may flow inside the cylinder and the recovery liquid may flow outside the cylinder, or the recovery liquid may flow inside the cylinder and the treatment liquid may flow outside the cylinder. In addition, a honeycomb structure in which these cylinders are combined may be used.

Since the ion conductive layer separates the treatment liquid from the recovery liquid, it is preferable that the ion conductive layer has a size corresponding to a range in which the ion selective permeable membrane is in contact with the treatment liquid. Therefore, the size is preferably the same as the size of the ion selective permeable membrane.

In the case where the ion selective permeable membrane includes the support layer to be described later, one surface of the support layer is preferably covered directly or with another layer interposed therebetween as necessary.

### [Examples]

Next, the present invention will be described in detail with reference to Examples, but the present invention is not limited to these Examples.

### [Measurement Method]

### (90° Bending Test)

Ion selective permeable membranes obtained in Examples and Comparative Examples were placed on a V-shaped block table having an angle of 90°, and an autograph ("AGS-X 5kN (test device name)", manufactured by Shimadzu Corporation) was used to apply a load while lowering a metal rod having a diameter of 12 mm at a rate of 5 mm/min. A state of the ion selective permeable membrane was evaluated according to the following criteria.
1: The ion selective permeable membrane was bent at 90° without cracks or the like.
2: Cracks or the like occurred and the ion selective permeable membrane was not bent at 90°.

### (Measurement of Tensile Strength)

With respect to the ion selective permeable membranes obtained in Examples and Comparative Examples, a test piece (in a strip shape with a width of 1.0 cm and a length of 5.0 cm) was prepared. The test piece was set in an autograph ("AGS-X 5kN (test device name)", manufactured by Shimadzu Corporation), and a tensile test was performed at a speed of 50 mm/min. The tensile test was continued until the test piece was broken, and the maximum load until the test piece was broken was defined as the tensile strength.

### (Example 1A)

An ion exchange membrane, i.e., NEOSEPTA CMB membrane (manufactured by ASTOM Corporation) was dried at 60°C for 12 hours to form a support layer. On one principal surface side thereof, a thin film layer was formed by an RF-sputtering method in Ar/O₂ using a lithium lanthanum titanate (Li_{0.29}La_{0.57}TiO₃) target, and the obtained product was used as an ion selective permeable membrane (1).

A film thickness of the thin film layer was 97.5 nm when measured as a film thickness of a film formed on a glass substrate set in a holder same as that of the support layer.

The ion selective permeable membrane (1) was set in an acrylic electrodeposition device (see Fig. 9), 15 mL (milliliter) of a 1.0 mol/L LiCl aqueous solution and 15 mL of a 1 mol/L NaCl aqueous solution, which were used as a treatment liquid, were set on a side on which the thin film layer was formed, and 30 mL of ion exchanged water, which was used as the recovery liquid 14, was set on the other side, followed by allowing to stand at room temperature for 1 day. A sample obtained by adjusting the pH of the obtained recovery liquid to 2 or less with nitric acid was measured with AES-ICP (product name: Agilent 5100 ICP-OES manufactured by Agilent Technologies). As a result, Li ions were detected, and a Li ion concentration in the recovery liquid was 1.2 mmol/L. A Na ion concentration was smaller than or equal to a detection lower limit (the detection lower limit was less than 0.1 mmol/L), and it was confirmed that ions, particularly metal ions, in the aqueous solution could be efficiently recovered.

In addition, as a result of measurement by the above measurement method, the evaluation in the 90° bending test was "1", the tensile strength was 70 N, and it was confirmed that excellent strength was obtained.

### (Comparative Example 1A)

An ion exchange membrane, i.e., NEOSEPTA CMB membrane (manufactured by ASTOM Corporation) was dried in the same manner as in Example 1A, set in an electrodeposition device, and subjected to the same experiment as in Example 1A. As a result, a Li ion concentration in the recovered liquid was 1.2 mmol/L, a Na ion concentration in the recovered liquid was 1.0 mmol/L, and it was not possible to efficiently recover ions, especially metal ions, in the aqueous solution.

In addition, as a result of measurement by the above measurement method, the evaluation in the 90° bending test was "1", the tensile strength was 70 N, and excellent strength was obtained.

### (Comparative Example 2A)

A thin film layer of titanium oxide was formed on a support layer in the same manner as in Example 1A except that the lithium lanthanum titanate (Li_{0.29}La_{0.57}TiO₃) target was changed to a titanium oxide (TiO₂) target. A Li ion concentration (the detection lower limit was 0.1 mmol/L or less) and a Na ion concentration were measured in the same manner as in Example 1A by setting titanium oxide in an electrodeposition device on a treatment liquid side. Both the Li ion concentration and the Na ion concentration were smaller than or equal to the detection lower limit, and it was not possible to efficiently recover ions, especially metal ions, in the aqueous solution.

In addition, as a result of measurement by the above measurement method, the evaluation in the 90° bending test was "1", the tensile strength was 70 N, and excellent strength was obtained.

### (Example 2A)

The ion selective permeable membrane (1) obtained in Example 1A was set in an acrylic electrodeposition device in the same manner as in Example 1A, a net-shaped (mesh: 5 mm) platinum electrode was set so as to be in contact with both principal surfaces of the ion selective permeable membrane (1), 4.5 V was applied to an electrode on a treatment liquid side as an anode and an electrode on a recovery liquid side as a cathode, and electrodialysis was performed at room temperature for 8 hours. After dialysis, when a Li ion concentration and a Na ion concentration were measured in the same manner as in Example 1A, the Li ion concentration in the recovery liquid was 5.1 mmol/L, the Na ion concentration in the recovery liquid was smaller than or equal to a detection lower limit, and it was confirmed that ions, particularly metal ions, in the aqueous solution could be efficiently recovered.

In addition, as a result of measurement by the above measurement method, the evaluation in the 90° bending test was "1", the tensile strength was 70 N, and it was confirmed that excellent strength was obtained.

### (Example 3A)

10 g of lithium lanthanum titanate was charged into 20 ml of an aqueous solution in which PVA was dissolved so as to be 5 wt%, and ultrasonically dispersed to prepare a slurry. The slurry was applied to a 10 cm square nickel non-woven fabric (manufactured by NIKKO TECHNO, Ltd.) and dried at 200°C for 1 hour to prepare a particle layer on the nickel non-woven fabric, thereby obtaining a structural intermediate (1). A film thickness of lithium lanthanum titanate measured by microscopic observation was 200 um. On the particle layer of lithium lanthanum titanate on the non-woven fabric, a thin film layer of lithium lanthanum titanate of 100 nm was formed by sputtering in the same manner as in Example 1A, thereby preparing an ion selective permeable membrane (2). A dialysis test was performed in the same manner as in Example 1A except that the ion selective permeable membrane (2) was used instead of the ion selective permeable membrane (1). As a result, when a Li ion concentration and a Na ion concentration were measured, the Li ion concentration in the recovery liquid was 1.4 mmol/L, the Na ion in the recovery liquid was smaller than or equal to a detection lower limit, and it was confirmed that the ions, particularly the metal ions, in the aqueous solution could be efficiently recovered.

In addition, as a result of measurement by the above measurement method, the evaluation of the 90° bending test was "1", the tensile strength was 80 N, and it was confirmed that excellent strength was obtained.

### (Example 4A)

The structural intermediate (1) in Example 3A was heat-treated at 450°C in air. A film thickness thereof was 180 µm. A thin film layer of lithium lanthanum titanate was formed in the same manner as in Example 3A except that the following structural intermediate (2) was used instead of the structural intermediate (1). Further, on the thin film layer, a slit-shaped metal mask 30 shown in Fig. 11 was set to prepare a Ni thin film having a film thickness of 20 nm by a sputtering method in an Ar atmosphere using a Ni target.

Further, a sintered body 30 was fixed and the slit-shaped metal mask was rotated by 90 degrees (metal mask 31) to similarly prepare a platinum thin film having a film thickness of 20 nm by a sputtering method. Thus, a mesh-shaped platinum electrode having a film thickness of 100 nm was prepared on the sintered body 30, which was used as the structural intermediate (2). A mesh size was 5 mm, and a line width was 200 µm.

As in Example 3A, a dialysis experiment was performed under the same conditions as in Example 2A by applying 4.5 V using a platinum electrode as an anode and a nickel non-woven fabric as a cathode. As a result, a Li ion concentration and a Na ion concentration in the recovery liquid were measured, the Li ion concentration in the recovery liquid was 7.2 mmol/L, the Na ion in the recovery liquid was smaller than or equal to a detection lower limit, and it was confirmed that ions, particularly metal ions, in the aqueous solution could be efficiently recovered.

### (Example 5A)

On the platinum electrode of the structural intermediate (2) in Example 4A, a mask having a line width larger than that of the mesh-shaped metal mask prepared by using a platinum electrode was used to prepare a mesh-shaped Ni thin film (catalyst) by a sputtering method in an Ar atmosphere using a Ni target. The structure was set in a dialysis device, 4.0 V was applied, and a dialysis experiment was performed under the same conditions as in Example 4A. As a result, when a Li ion concentration and a Na ion concentration were measured, the Li ion concentration in the recovery liquid was 5.5 mmol/L, the Na ion concentration in the recovery liquid was smaller than or equal to a detection lower limit, and it was confirmed that ions, particularly metal ions, in the aqueous solution could be efficiently recovered.

### (Example 6A)

To 4.0 g of polyvinylidene fluoride (PDVF), 4.0 g of lithium lanthanum titanate, 0.6 g of lithium perchlorate, and 11 ml of N,N-dimethylformamide as an organic solvent were added and mixed using a revolution mixer to prepare a slurry. The slurry was applied onto a release film (formed of PET), and heated at 80°C for 10 minutes to be temporarily dried, thereby forming a coating film. Next, the coating film was peeled off from the release film, and was subjected to main drying (80°C, 12 hours) in a vacuum dryer. A reverse osmosis membrane (RO membrane) using a polyester non-woven fabric as a support layer was superimposed on the coating film obtained by the main drying, and then integrated by a hot pressing treatment (180°C, 10 minutes). Thereafter, a thin film layer of lithium lanthanum titanate of 100 nm was formed, by sputtering, on a surface side of the coating film which was not in contact with the RO membrane, and thus an ion conductive layer was prepared.

As in Example 3A, a dialysis experiment was performed under the same conditions as in Example 2A by applying 4.5 V using a platinum electrode as an anode and a nickel non-woven fabric as a cathode. As a result, a Li ion concentration and a Na ion concentration in the recovery liquid were measured, the Li ion concentration in the recovery liquid was 2.4 mmol/L, the Na ion in the recovery liquid was smaller than or equal to a detection lower limit, and it was confirmed that ions, particularly metal ions, in the aqueous solution could be efficiently recovered.

In addition, as a result of measurement by the above measurement method, the evaluation in the 90° bending test was "1", the tensile strength was 74 N, and it was confirmed that excellent strength was obtained.

From the results of Examples 1A to 6A, it is confirmed that the ion selective permeable membranes in these Examples can selectively recover the target ions, can efficiently recover the ions as an ion selective permeable membrane, and exhibit excellent performance. In addition, it is also confirmed that Examples 1A to 3A are excellent in 90° bending and tensile strength, and can cope with an increase in size.

On the other hand, in Comparative Examples, it is confirmed that, the strength is excellent, but the ions are not efficiently recovered, and the function as an ion selective permeable membrane is not achieved.

### (Example 1B)

### (Preparation of Ion Selective Permeable Membrane)

On a lithium lanthanum titanate (Li_{0.29}La_{0.57}TiO₃) sintered body 33 (manufactured by Toho Titanium Co., Ltd., corresponding to an ion conductive layer) having a size of 5 cm in length, 5 cm in width, and 0.5 mm in thickness, the slit-shaped metal mask 30 shown in Fig. 11 was set on one surface thereof to prepare a Ni thin film having a film thickness of 20 nm by a sputtering method in an Ar atmosphere using a Ni target.

Further, the sintered body 30 was fixed and the slit-shaped metal mask was rotated by 90 degrees (metal mask 31) to similarly prepare a Ni thin film having a film thickness of 20 nm by a sputtering method. Thus, a mesh-shaped Ni thin film (catalyst) having a film thickness of 20 nm was prepared on the sintered body 30. A mesh size was 5 mm, and a line width was 500 µm.

Further, on the sintered body 33 on which the catalyst was formed in a mesh shape, a slit-shaped metal mask having a line width of 200 µm was used to prepare a Pt electrode thin film of 100 nm, and an electrode was prepared in a mesh shape by a sputtering method while rotating the metal mask by 90 degrees in the same manner as in the formation of the catalyst. The electrode was formed on the catalyst on an entire surface of the sintered body.

On the other surface of the sintered body 33, a slit-shaped metal mask having a line width of 200 µm was used to form a mesh-shaped (mesh size: 5 mm) electrode having a thickness of 200 nm by a sputtering method, which was performed twice, using an Au target while rotating the metal mask by 90 degrees, thereby preparing an ion selective permeable membrane 2 (Fig. 13) including electrodes on both principal surface sides of the sintered body 33.

Fig. 13 shows a cross section taken along a line segment 32 having ends a and b in Fig. 12.

### (Ion Recovery)

As shown in Fig. 9, the ion selective permeable membrane 2 was set in an ion recovery device (formed of acrylic), and a mixed aqueous solution (treatment liquid 10) containing 15 mL (milliliter) of a 1 mol/L LiCl aqueous solution and 15 mL of a 1 mol/L NaCl aqueous solution was placed on a side where the catalyst was prepared, and 30 mL of ion exchanged water as the recovery liquid 11 was placed on the other side. A surface of the ion selective permeable membrane 2 on which the catalyst was provided was placed so as to be in contact with the treatment liquid 10.

A constant DC voltage was applied to the Pt thin film electrode and the Au thin film electrode. A current value was 10 mA at a voltage of 3.0 V.

In this state, electrodialysis was performed for 1 hour. A sample obtained by adjusting the pH of the obtained recovery liquid to 2 or less with nitric acid was measured by AES-ICP ("Agilent 5100 ICP-OES (model number)", manufactured by Agilent Technologies). As a result, Li ions were detected, and Na ions were detected to be smaller than or equal to a detection lower limit (the detection lower limit was less than 0.1 mmol/L).

### (Example 2B)

### (Preparation of Ion Selective Permeable Membrane)

On a lithium lanthanum titanate (Li_{0.29}La_{0.57}TiO₃) sintered body (manufactured by Toho Titanium Co., Ltd., corresponding to an ion conductive layer) having a size of 5 cm in length, 5 cm in width, and 0.5 mm in thickness, the slit-shaped metal mask shown in Fig. 11 was set on one principal surface side thereof to prepare a Ni thin film having a film thickness of 20 nm by a sputtering method in an Ar atmosphere using a Ni target.

Further, the sintered body was fixed and the slit-shaped metal mask was rotated by 90 degrees to similarly prepare a Ni thin film having a film thickness of 20 nm by a sputtering method. Thus, a mesh-shaped Ni thin film (catalyst) having a film thickness of 20 nm was prepared on the sintered body 30. A mesh size was 5 mm, and a line width was 500 µm.

Further, on the sintered body on which the catalyst was formed in a mesh shape, a slit-shaped metal mask having a line width of 200 µm was used to prepare a Pt electrode thin film of 100 nm, and an electrode was prepared in a mesh shape by a sputtering method while rotating the metal mask by 90 degrees in the same manner as in the formation of the catalyst. The electrode was formed on the catalyst on an entire surface of the sintered body.

On the other principal surface side of the sintered body, a slit-shaped metal mask having a line width of 200 µm was used to form a mesh-shaped NiOx thin film (catalyst) having a film thickness of 10 nm by an RF-sputtering method, which is performed twice, in Ar/O₂ using a Ni target while rotating the metal mask by 90 degrees.

Further, the slit-shaped metal mask having a line width of 200 µm was used to prepare a mesh-shaped Pt electrode thin film of 100 nm. Thus, an ion selective permeable membrane including a catalyst and an electrode on both surfaces was obtained.

The ion permeable membrane was set in the ion recovery device. The Ni/Pt thin film electrode was set on the treatment liquid side, and the NiO/Pt thin film electrode was set on the recovery liquid side. A constant DC voltage was applied to both electrodes. A current value was 11 mA at a voltage of 3.0V.

In this state, electrodialysis was performed for 1 hour. As a result of measuring the aqueous solution of the recovery layer by AES-ICP, Li ions were detected, and Na ions were detected to be smaller than or equal to a detection lower limit.

### (Comparative Example 1B)

On both principal surface sides of a lithium lanthanum titanate (Li_{0.29}La_{0.57}TiO₃) sintered body (manufactured by Toho Titanium Co., Ltd.) having a size of 5 cm in length, 5 cm in width, and 0.5 mm in thickness, a membrane was prepared by forming an Au thin film (electrode) having a line width of 200 µm, a film thickness of 100 nm, and a mesh size of 5 mm by a sputtering method in an Ar atmosphere using an Au target.

The membrane was set in an ion recovery device. A constant DC voltage was applied to both electrodes on both principal surface sides of the membrane. A current value was 5 mA at a voltage of 3.0 V.

In Examples 1B and 2B in which 3.0 V, which is the same as that of Comparative Example 1B, is applied, the current value is high, and it is found that according to the present invention, ions can be recovered more efficiently in a large amount of movement of ions. In addition, since lithium ions are detected in the recovery liquid, and sodium ions are not detected, it was also found that ions could be selectively recovered. This suggests that various ions can be efficiently recovered because the ions to be recovered can be selected by changing the ion conductive layer.

### Reference Signs List

1. Ion selective permeable membrane
2. Support layer
3. Ion conductive layer
4. Alkali-resistant layer
5. Particle layer
6. Thin film layer
7. Porous body protective layer
11. Electrode
12. Catalyst
13. Treatment liquid
13a. Flow of treatment liquid
14. Recovery liquid
15. Ions to be recovered
16. Ions not to be recovered
20. Ion recovery device
21. Treatment tank
30. Slit-shaped metal mask
31. State in which metal mask is rotated by 90 degrees
32. Line segment
33. Sintered body
A. Movement of ions to be recovered
a, b. Ends of line segment

## Claims

1. An ion selective permeable membrane comprising:
an ion conductive layer containing an ion conductor formed of an inorganic substance, wherein the ion selective permeable membrane has the following configuration (I) or (II):
(I) the ion conductive layer is provided on at least one principal surface side of a support layer, and
(II) at least one selected from an electrode and a catalyst is provided on at least one principal surface side of the ion conductive layer.

2. The ion selective permeable membrane according to claim 1, wherein the support layer is a porous body.

3. The ion selective permeable membrane according to claim 2, wherein the porous body is a non-woven fabric or a porous body formed of at least one selected from carbon, a metal, a polymer, and a ceramic.

4. The ion selective permeable membrane according to any one of claims 1 to 3, wherein the ion conductive layer includes at least one of a particle layer containing ion conductor particles and a thin film layer which is a thin film of the ion conductor.

5. The ion selective permeable membrane according to claim 4, wherein the ion conductive layer includes both the particle layer and the thin film layer.

6. The ion selective permeable membrane according to claim 4 or 5, wherein the thin film layer is a vapor deposition film.

7. The ion selective permeable membrane according to any one of claims 1 to 6, wherein two of the support layers are included and the ion conductive layer is sandwiched between the two support layers.

8. The ion selective permeable membrane according to any one of claims 1 to 7, wherein the ion conductor contains a lithium ion conductor of at least one of a lithium-containing oxide and a lithium-containing oxynitride.

9. The ion selective permeable membrane according to claim 8, wherein the lithium-containing oxide is an oxide containing at least one selected from La, Zr, Ti, Al, and Si.

10. The ion selective permeable membrane according to claim 9, wherein the lithium-containing oxide is at least one oxide selected from Li₃PO₄, Li-La-Zr-O (LLZO), Li-La-Ti-O (LLTO), and Li-Al-Si-P-Ti-Ge-O (LASiPTiGeO).

11. The ion selective permeable membrane according to any one of claims 8 to 10, wherein the lithium-containing oxynitride is an oxide containing at least one selected from La, Zr, Ti, Al, and Si.

12. The ion selective permeable membrane according to claim 11, wherein the lithium-containing oxynitride is at least one oxynitride selected from Li₃PO₄-N (LiPON), LLZO-N (LLZON), LLTO-N (LLTON), and LASiPTiGeO-N, which are obtained by adding nitrogen to the lithium-containing oxide.

13. The ion selective permeable membrane according to any one of claims 1 to 12, further comprising:
an alkali-resistant layer, wherein
the alkali-resistant layer is provided over an entire surface of one principal surface of the ion conductive layer.

14. The ion selective permeable membrane according to claim 13, wherein the alkali-resistant layer is a layer containing at least one selected from a metal oxide and a metal oxynitride.

15. The ion selective permeable membrane according to any one of claims 1 to 14, wherein one or more selected from an electrode and a catalyst is provided on at least one principal surface side in the configuration (I).

16. The ion selective permeable membrane according to claim 15, wherein an electrode and a catalyst are provided on at least one principal surface side in the configuration (I).

17. The ion selective permeable membrane according to claim 1 or 16, wherein the catalyst is provided between the ion conductive layer and the electrode.

18. The ion selective permeable membrane according to claim 1, 16 or 17, wherein the catalyst is in contact with the ion conductive layer and the electrode.

19. The ion selective permeable membrane according to any one of claims 1 and 16 to 18, further comprising:
another electrode on a principal surface side opposite to the principal surface side on which the electrode is provided.

20. The ion selective permeable membrane according to any one of claims 1 and 16 to 19, wherein the catalyst is a catalyst that inhibits an overvoltage required for gas generation.

21. The ion selective permeable membrane according to any one of claims 1 and 16 to 20, wherein the catalyst contains at least one selected from nickel, tin, platinum, gold, iridium, palladium, and ruthenium.

22. The ion selective permeable membrane according to any one of claims 1 to 21, further comprising:
a porous body protective layer.

23. An ion recovery device comprising:
the ion selective permeable membrane according to any one of claims 1 to 22.
